# EUROPEAN PATENT APPLICATION

(11) **EP 1 946 831 A1**
(43) Date of publication of application: **23.07.2008**
(21) Application number: 07122365.5
(22) Date of filing: 05.12.2007
(51) Int. Cl.: B01J 19/00, B01L 3/00, B01L 3/02, C12M 1/34, F04B 43/04, G01N 33/50, G01N 35/10

(54) **Modular microchip inspection apparatus**

(30) Priority: 12.12.2006 JP 2006334264
(71) Applicant: Konica Minolta Medical & Graphic, Inc., Hino-shi, Tokyo 191-8511 (JP)
(72) Inventor: Kitamura, Mitsuharu, Hino-shi, Tokyo Tokyo 191-8511 (JP); Nobumoto, Yushi, Hino-shi, Tokyo Tokyo 191-8511 (JP)
(74) Representative: Henkel, Feiler & Hänzel

(57) **Abstract**

A microchip inspection apparatus having: a main body of the apparatus including a microchip storage section for storing a microchip provided with a flow path wherein a sample is mixed, reacted and detected; and a detecting section provided to correspond to the test site of the microchip stored in the microchip storage section; and a pump cartridge configured to be removable from the main body, the pump cartridge including a solution drive pump for feeding a drive solution along a minute flow path of the microchip stored in the microchip storage section, and a drive solution tank for storing the drive solution supplied to the solution drive pump.

## Description

### RELATED APPLICATION

This application is based on Japanese Patent Application No. 2006-334264 filed on December 12, 2006, in Japanese Patent Office, the entire content of which is hereby incorporated by reference.

### BACKGROUND OF THE INVENTION

The present invention relates to a microchip inspection apparatus.

In recent years, world attention is focused on a system wherein the conventional apparatuses and devices (e.g. pump, valve, flow path and sensor) for sample preparation, chemical analysis and chemical composition are micromachined and are integrated on one chip, using the micromachine technology and micromachining technology. This system is also called a µ-TAS (Micro Total Analysis System) wherein a reagent and sample (e.g. extracted solution obtained by treating and extracting the urine, saliva and blood of a test subject and by subjecting them to DNA treatment) are added to a member called a microchip, and the reaction thereof is detected, whereby the sample characteristics are examined.

The microchips of various patterns have been proposed. For example, a groove is formed by the photolitho process (a process of forming a groove by etching a pattern image with chemicals) or by using a laser beam, whereby a minute flow path for flow of a reagent and sample, and a solution pool for storing reagent are formed on the substrate made of a resin material or glass material.

When examining the sample characteristics using these microchips, the drive solution is fed by a micro-pump into a minute flow path of the microchip, and the reagent and sample stored in the microchip is pushed out. This procedure causes reaction between the reagent and sample which are led to the test site wherein detection is carried out. At the test site, the target substance is detected using an optical detection method, for example.

Reference to the micro-pump is found in the Japanese Unexamined Patent Application Publication No. 2006-284451 wherein a micro-pump using a piezoelectric element is disclosed as a drive device. To ensure high-precision control of the amount of solution to be fed, the amount of solution to be fed by one drive of a piezoelectric element must be restricted to a very small level. In the meantime, this is accompanied by an increase in the number of the operations to drive the piezoelectric element. The increases in the number of the drive operations will reduce the service life of the piezoelectric element and the piezoelectric element will be separated from the adhered surfaced, with the result that the micro-pump replacement cycle is reduced. Further, in a micro-pump disclosed in the Patent Document 1 wherein a plurality of micro-pumps are integrally built, the probability of the occurrence of failure is increased in proportion to the number of the drive operations. This signifies a further reduction of micro-pump replacement cycle.

In the Japanese Unexamined Patent Application Publication No. 2005-69997, the main body of the microchip inspection apparatus is provided with a pump for feeding a drive solution and a tank for storing the drive solution.

However, when a micro-pump is built in the main body of the apparatus, as disclosed in the Japanese Unexamined Patent Application Publication No. 2005-69997, replacement by the user is not easy at the expiration of the micro-pump service life or in the event of a failure. Further, during the replacement work, air bubbles or dust may enter the micro-pump to cause improper feed of the solution or, in the worst case, complete failure of solution feed may occur.

The object of the present invention is to provide a microchip inspection apparatus based flow path structure that ensures easy maintenance by the user and prevents entry of air bubbles or dust.

### SUMMARY

The aforementioned object of the present invention can be achieved by the following structure:
a microchip inspection apparatus comprising: a main body of the apparatus including a microchip storage section for storing a microchip provided with a flow path wherein a sample is mixed, reacted and detected; and a detecting section provided to correspond to the test site of the microchip stored in the microchip storage section; and a pump cartridge configured to be removable from the main body, the pump cartridge including a solution drive pump for feeding a drive solution along a minute flow path of the microchip stored in the microchip storage section, and a drive solution tank for storing the drive solution supplied to the solution drive pump.

### BRIEF DESCRIPTION OF THE DRAWINGS

Fig. 1 is a drawing representing the microchip inspection apparatus of this embodiment; and
Fig. 2 is a block diagram showing the top view of the microchip inspection apparatus of this embodiment.

### DETAILED DESCRIPTION OF THE PREFERRED EMBODIMENT

The following describes the embodiments of the present invention, without being restricted thereto. The assertive statement in the following embodiment indicates the best mode, without the meaning of the terms used in the present invention or the technological scope being restricted thereto.

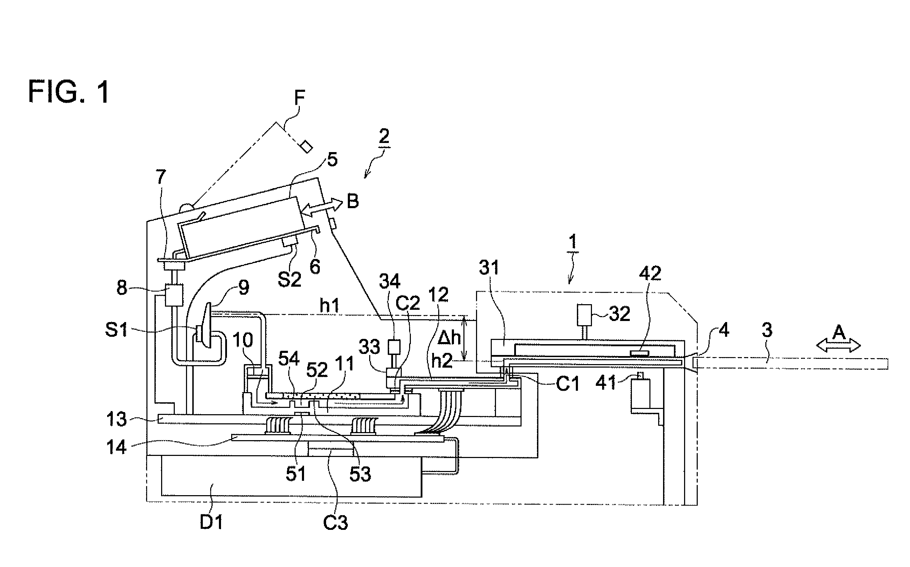

Fig. 1 is a drawing representing the microchip inspection apparatus of this embodiment. In Fig. 1, the reference numeral 1 denotes the main body of the apparatus, and 2 indicates a pump cartridge. The microchip 3 can be removably mounted to the main body of the apparatus 1 from a microchip inlet 4 in the direction shown by arrow A. Further, the pump cartridge 2 is configured to be mounted on the top of the furthest side of the main body of the apparatus when viewed from the microchip inlet 4 side of the inspection apparatus. The main body of the apparatus 1 and pump cartridge 2 are connected by the connection section C1 in such a way that there will be no leakage of solution. The main body of the apparatus 1 has a power supply section Dl as a power source for supplying power to each portion of the apparatus. The pump cartridge 2 is supplied with power from the power supply section Dl through the connector C3 which is electrically connected with the power source when the pump cartridge 2 is mounted on the main body of the apparatus 1.

It is also provided with a light emitting section 41 for the state of detecting the reaction between the sample in the microchip 3 and the reagent, and an optical detecting section made up of a light receiving section 42 and others.

### (Pump cartridge)

The following describes the details of the pump cartridge 2:
The pump cartridge 2 includes a drive solution tank 5 for storing a drive solution; a tank installation base 6 with the drive solution tank 5 mounted thereon; and a joint section 7 connected with the drive solution tank 5 to feed the drive solution to the post-process. It is also provided with a solenoid valve 8 for controlling the solution having been fed thereto; a flexible intermediate bag 9 for temporary storage of the solution; a filter section 11 for removing impurities from the solution; a solution drive pump 11 (called the micro-pump 11) for feed the rive solution; and an intermediate flow path member 12 for feed the drive solution to the microchip 3. Further major components include a substrate 13 for mounting the micro-pump 11 thereon, and a relay substrate 14 for supplying each portion of the pump cartridge 2 with power supplied from the connector C3. In the pump cartridge 2 to be replaced, the drive solution is filled in the flow path from the drive solution tank 5 to the intermediate flow path member 12 via the micro-pump 11. This arrangement eliminates the possibility of air bubbles and dust entering the micro-pump 11 at the time of replacement, with the result that the solution is fed correctly by the micro-pump 11, without a solution feed failure occurring.

In this embodiment, the drive solution tank 5 is mounted on the top of the pump cartridge and drive solution fed from the drive solution tank 5 flows due to gravity. When the drive solution tank is replaced, the cover F is opened and the tank can be removed in the direction shown by arrow B. Further, the drive solution tank 5 is mounted in a tiled form facing downward, as shown in Fig. 1 so that the solution outlet of the drive solution tank 5 is positioned at the lowest level.

Further, to make the drive solution tank 5 removable, a female joint is arranged on the drive solution tank 5, and a male joint is arranged on the tank installation base 6 in this embodiment. A pair of male/female joints are designed in such a way that, when the drive solution tank 5 is mounted, the drive solution flows to the tube T1, and when the tank is removed, the drive solution does not leak. Further, when the viscosity of the drive solution is in the range from 1 through 10 map·s (at an ambient temperature of 25 °C), it is also possible to arrange an elastic member such as a rubber at the solution outlet on the side of the drive solution tank 5, and to install a small needle such as a syringe on the side of the tank installation base 6, whereby the tank can be removed. The solenoid valve 8 is installed halfway through the flow path connecting between the drive solution tank 5 and micro-pump 11 at a level lower than the drive solution tank 5 and higher than the micro-pump 11. Further, a solution volume detecting sensor S1 for detecting the volume of solution is mounted in the vicinity of the elastic intermediate bag 9, and detects the position wherein the drive solution is fed to the intermediate bag 9 and the bag is inflated. The solenoid valve 8 is opened or closed by the ON/OFF signal of the solution volume detecting sensor S1, thereby providing on-off control of the volume of the drive solution fed from the tube T1.

The difference Δh = (h1-h2) between the position h1 of the solution outlet of the intermediate bag 9, and the position h2 of the inlet of the drive solution on the microchip 3 is called the hydrostatic pressure. The volume of drive solution flowing in the microchip 3 is controlled by vertically moving the position of mounting the intermediate bag 9.

To detect the remaining amount of the drive solution in the drive solution tank, a tank installation base 6 is provided with a remaining solution detecting sensor S2. A load cell or the like for emitting the weight as signal information is used as the remaining solution detecting sensor S2. The signal information from the load cell is put into the control section of the main body of the apparatus, and the remaining volume is displayed on the display section of the main body of the apparatus (not illustrated) in response to the signal thereof. Alternatively, an alarm buzzer is sounded to notify the user (the personnel in charge) of the remaining volume of the drive solution in the drive solution tank.

The following describes the micro-pump 11.

The micro-pump 11 includes a pump chamber 52, a piezoelectric element 51 for changing the volume of the pump chamber 52; a first aperture flow path 53 located on the side of the intermediate flow path member 12 of the pump chamber 52, and a second aperture flow path 54 located on the filter section 10 of the pump chamber 52, and is installed horizontally inside the pump cartridge. The first aperture flow path 53 and second aperture flow path 54 form the narrow flow paths, and the first aperture flow path 53 is longer than the second aperture flow path 54.

When drive solution is fed in the forward direction (in the direction of an intermediate volume path member 12), the piezoelectric element 51 is driven so as to cause a rapid reduction in the volume of the pump chamber 52. Then a turbulent flow is produced in the second aperture flow path 54 as a shorter aperture flow path, with the result that the flow path resistance of the second aperture flow path 54 is greater that of the first aperture flow path 53 as a longer aperture flow path. This procedure allows the drive solution 11 in the pump chamber 52 to be pushed out and fed predominantly toward the first aperture flow path 53. Then the piezoelectric element 51 is driven so as to cause a gradual increase in the volume of the pump chamber 52. The increase in the volume of the pump chamber 52 causes the drive solution to flow from the first aperture flow path 53 and second aperture flow path 54. In this case, the second aperture flow path 54 is shorter than the first aperture flow path 53, and therefore, the flow path resistance of the second aperture flow path 54 is reduced below that of the first aperture flow path 53. The drive solution flows into the pump chamber 52 predominantly from the second aperture flow path 54. The aforementioned operations are repeated by the piezoelectric element 51, whereby the drive solution is fed in the forward direction.

In the meantime, when the drive solution is fed in the reverse direction (toward the filter section 11), the piezoelectric element 51 is driven so as to cause a gradual increase in the volume of the pump chamber 52. Since the second aperture flow path 54 is shorter than the first aperture flow path 53, the flow path resistance of the second aperture flow path 54 is reduced below that of the first aperture flow path 53. This procedure allows the drive solution in the pump chamber 52 to be pushed and fed predominantly toward the second aperture flow path 54. Then the piezoelectric element 51 is driven so as to cause a rapid increase in the volume of the pump chamber 52. Thus, the increase in the volume in the pump chamber 52 causes the drive solution to flow from the first aperture flow path 53 and second aperture flow path 54. In this case, a turbulent flow is produced in the second aperture flow path 54 as a shorter aperture flow path, with the result that the flow path resistance of the second aperture flow path 54 is greater that of the first aperture flow path 53 as a longer aperture flow path. This procedure allows the drive solution to be pushed and fed predominantly into the pump chamber 52 from the first aperture flow path 53. The aforementioned operations are repeated by the piezoelectric element 51, whereby the drive solution is fed in the reverse direction.

As described above, similarly to the case of processing a groove on the microchip, photolitho processing or laser beam is applied to a substrate made of a resin material or glass material, and a groove is produced on the micro-pump 11. Then a piezoelectric element is arranged on the lower outside of the substrate of the groove. The volume of solution fed out by the micro-pump formed in such a structure is determined by the width of the groove and the length of the piezoelectric element arranged on the groove. Thus, a very small amount of solution can be fed accurately by controlling the voltage applied to the piezoelectric element and the number of drive operations (frequency). As described above, the size of the micro-pump per piece is determined by the width of the groove and the length of the piezoelectric element. Thus, a plurality of pumps can be formed on one substrate by increasing the dimensions of the substrate. Generally, such a micro-pump is called the diffuser type pump in some cases.

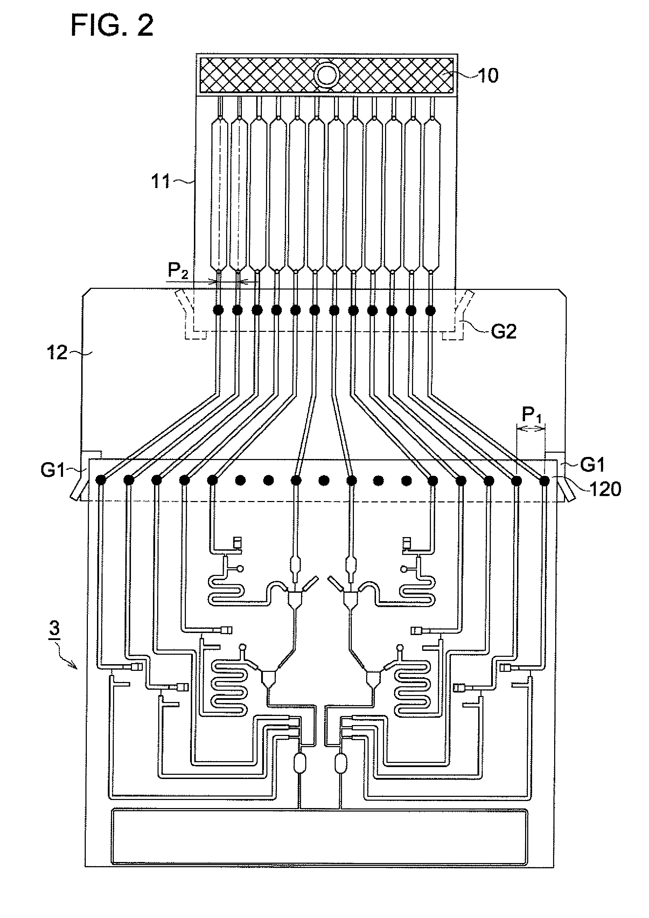

Fig. 2 is a block diagram showing the top view of the microchip inspection apparatus of this embodiment. For simplicity of explanation, the cover and others are omitted.

The flow path patterns of the microchip 3 differ according to the type of the reagent and reagent solution and the number thereof. The opening sections 121 for capturing the drive solution are provided at a predetermined pitch p1. In the meantime, a plurality of micro-pumps 11 are formed on the substrate at a predetermined pitch p2. In this case, the pitch p2 does not always agree with the pitch p1. Thus, an intermediate flow path member 12 is provided to ensure agreement between pitches.

The contact surfaces of the connection section C1 between the intermediate flow path member 12 and microchip 3, and the connection section C2 between the micro-pump 11 and intermediate flow path member 12 are preferably formed of the flexible resin (elastic and shape-conforming resin) such as polytetrafluoro ethylene or silicone resin in order to ensure required sealing property and to prevent the drive solution from leaking. Such flexible contact surfaces can be provided by the substrate constituting the microchip or by the other flexible members bonded around the opening of the flow path in the connection sections C1 and C2.

Further, the reference numeral 31 is a chip pressure plate for bringing the microchip 3 in close contact with the connection section C1 so as not to allow it to be displaced. The reference numeral 32 indicates a pressure plate drive section for vertical traveling of the chip pressure plate 31. The G1 shows a regulating member for accurately positioning the microchip 3 with respect to the intermediate flow path member 12.

Similarly, a member pressure plate 33 for pressing the intermediate flow path member 12, and a member pressure plate drive section 34 for vertical traveling of the member pressure plate 33 are provided to ensure that the intermediate flow path member 12 comes in close contact with the micro-pump 11 at the connection section C2. Further, a regulating member G2 for accurately positioning the intermediate flow path member 12 with respect to the micro-pump 11 is also provided.

As described above, the piezoelectric element 51 used in the micro-pump 11 has a longer service life because of the structure of applying mechanical vibration to the element. Thus, to ensure normal drive of the pump cartridge at all times, the drive time is always managed. In the microchip inspection apparatus of the present embodiment, a relay substrate 14 is provided with a storage medium capable of storing the time of apparatus drive and the date and time of usage and reading out the stored information. The information of this storage medium is used to indicate an alarm on a display section (not illustrated) when the specified time has been reached.

### (Conclusion)

As described above, the microchip diagnostic apparatus of the present invention is structured in such a way that the pump cartridge 2 is mounted removable from the main body of the apparatus 1. This structure ensures easy maintenance by replacement of the pump cartridge section. Further, in the replacement of the drive solution tank, the user (the personnel in charge) is not required to have a special technological skill. Further, this structure ensures that air bubbles and dust do not enter the micro-pump 11 during the replacement work, and the solution is fed correctly by the micro-pump 11, without any possibility of a solution feed failure occurring.

When returned to a skilled operator or expert service company for recycling, the replaced pump cartridge provides a microchip diagnostic apparatus without wasting resources.

## Claims

1. A microchip inspection apparatus (1) comprising:
a main body of the apparatus including a microchip storage section for storing a microchip (3) provided with a flow path wherein a sample is mixed, reacted and detected;
a detecting section provided to correspond to the test site of the microchip (3) stored in the microchip storage section; and
a pump cartridge (2) configured to be removable from the main body, the pump cartridge (2) including a solution drive pump (11) for feeding a drive solution along a minute flow path of the microchip (3) stored in the microchip storage section, and a drive solution tank (5) for storing the drive solution supplied to the solution drive pump (11).

2. The microchip inspection apparatus of claim 1, wherein the main body includes a power source (D1) for supplying power to each portion of the apparatus (1) and the pump cartridge (2) includes a connector (C3) which is electrically connected with the power source (D1) when the pump cartridge (2) is mounted on the main body of the apparatus (1), and wherein the pump cartridge (2) is supplied with power from the power source (D1) through the connector (C3).

3. The microchip inspection apparatus of claim 1 or claim 2, wherein the pump cartridge (2) includes a storage medium capable of storing information on apparatus usage and reading out the stored information.

4. The microchip inspection apparatus according to any one of claims 1 to 3, wherein the pump cartridge (2) is configured to be mounted on the top of the furthest side of the main body of the apparatus (1).

5. The microchip inspection apparatus according to any one of claims 1 to 4, wherein the pump cartridge (2) is configured so that the drive solution tank (5) is removably mounted to the pump cartridge (2).

6. The microchip inspection apparatus according to any one of claims 1 to 5, wherein the pump cartridge (2) is configured so that the drive solution tank (5) is arranged at a level higher than the solution drive pump (11).

7. The microchip inspection apparatus according to any one of claims 1 to 6, wherein the pump cartridge (2) includes a solenoid valve (8) installed halfway through a flow path connecting between the drive solution tank (5) and the solution drive pump (11) at a level lower than the drive solution tank (5) and higher than the solution drive pump (11) for controlling volume of the drive solution flowing the flow path.

8. The microchip inspection apparatus according to any one of claims 1 to 7, wherein the solution drive pump (11) is installed horizontally inside the pump cartridge (2).

9. The microchip inspection apparatus of claim 7, further comprising: a flexible intermediate bag (9) for temporary storage of the solution, wherein the bag (9) is installed halfway through a flow path connecting between the solution drive pump (11) and the solenoid valve (8) at a level lower than the solenoid valve (8) and higher than the solution drive pump (11).

10. The microchip inspection apparatus of claim 9, further comprising a sensor (S1) for detecting a volume of solution in the elastic intermediate bag (9), wherein the solenoid valve (8) controls volume of the solution following into the intermediate bag (9) based on the information from the sensor (S1).
